# EUROPÄISCHE PATENTSCHRIFT

(11) **EP 2 200 109 B1**
(45) Veröffentlichungstag und Bekanntmachung des Hinweises auf die Patenterteilung: **07.01.2015**
(21) Anmeldenummer: 09176957.0
(22) Anmeldetag: 24.11.2009
(51) Int. Cl.: F28F 3/12, F28F 3/02, F28D 15/02, F28D 20/00, H01M 2/10, H01M 10/613, H01M 10/6551, H01M 10/6554, H01M 10/6555, H01M 10/6556, H01M 10/6557, H01M 10/04, H01M 10/647, H01M 10/6567

(54) **Halte- und Kühlungsvorrichtung für eine galvanische Zelle**
Holding and cooling device for a galvanic cell
Dispositif de retenue et de refroidissement pour une cellule galvanique

(30) Priorität: 12.03.2009 DE 102009012483; 12.12.2008 DE 102008061755
(43) Veröffentlichungstag der Anmeldung: 23.06.2010
(73) Patentinhaber: Behr GmbH & Co. KG, 70469 Stuttgart (DE)
(72) Erfinder: Hirsch, Stefan, 70180 Stuttgart (DE); Herrmann, Hans-Georg, 70619 Stuttgart (DE); Isermeyer, Tobias, 74245 Löwenstein (DE); Moser, Michael, 73492 Rainau (DE); Eckstein, Jürgen, 71409 Schwaikheim (DE)
(74) Vertreter: Grauel, Andreas

(56) Entgegenhaltungen:
- EP-A1- 1 011 156
- WO-A1-2009/146876
- DE-A1-102006 059 989
- DE-A1-102007 010 741
- DE-A1-102008 016 936
- US-A1- 2004 201 366

## Beschreibung

Die vorliegende Erfindung bezieht sich auf eine Halte- und Kühlungsvorrichtung gemäß Anspruch 1.

Weiterentwickelte Hochleistungs-Batterien, z.B. auf Basis Li-Ionen, ermöglichen mittlerweile die Nutzung dieser Energiespeicherung für vielfältige Anwendungsgebiete mit hohem Energiebedarf, z.B. für Fahrzeuge. Diese Hochleistungsbatterien setzen sich häufig aus einer größeren Anzahl von Standardzellen zusammen. Die Funktion und das Zusammenspiel der Zellen sind stark temperaturabhängig. Dies bedeutet, dass es wünschenswert ist, alle Zellen möglichst gleichmäßig auf einer Betriebstemperatur zu halten. Zu große Abweichungen von der Betriebstemperatur schaden der Lebensdauer der Zellen erheblich. Beim Betrieb, insbesondere bei schneller Be- oder Entladung entsteht Verlustwärme, die eine Kühlung der Batterie bzw. der Zellen notwendig macht, um die gewünschte Betriebstemperatur sicherzustellen.

Die Druckschrift DE 10 2007 066944 offenbart u.a. eine Kühlungsmöglichkeit für Batterieflachzellen, die als thermischen Pfad Kühlbleche vorweist. Es wird erwähnt, dass die Bleche mit der Kühlplatte in thermischem Kontakt stehen; dieser Kontakt sollte durch Vergießen hergestellt werden.

Die Druckschrift DE 102 23 782 B4 offenbart eine Kühleinrichtung von Rundzellen bestehend aus einer Grundplatte und seitlich in Längsrichtung an den Zellen anliegenden Kühlelementen. Die Zellen sind kraftschlüssig mit der Kühleinrichtung verbunden, die anliegenden Kühlelemente verfügen über Dehnfugen, um die Problematik der Spaltbildung und des Wärmeübergangs zu verbessern.

Die Technologie des Anklebens oder Vergießens von Kühlblechen auf eine Kühlplatte weist nicht die gewünschte Haltbarkeit und Prozessfähigkeit auf. Alternativ werden Zellen bzw. Module kraftschlüssig an die Wärmesenke angebunden. Der Wärmeübergang ist dabei ebenfalls nicht optimal. Andere Verfahren zum thermischen Kontaktieren einer Energiespeichereinheit (wie einer Batterie) mit einem Kühlungselement können allerdings die Energiespeichereinheit in dem Kühlungselement beschädigten.

Die Druckschriften DE 10 2006 059 989 A1 und WO 2009/146876 A1, wobei letztere dem Stand der Technik gemäß Artikel 54(3) EPÜ zuzurechnen ist, offenbaren Halte- und Kühlvorrichtungen gemäß dem Oberbegriff des Anspruchs 1. Darüber hinaus offenbart DE 10 2008 016 936 A1 eine Halte- und Kühlvorrichtung bei der Kühlbleche jeweils so geformt sind dass sie ein Gehäuse für die jeweilige Energiespeicherzelle bilden.

Der durch die genannten Druckschriften aufgezeigte Stand der Technik lässt noch eine Verbesserung bei der thermischen Kontaktierung der Energiespeichereinheiten (wie beispielsweise von Batterien) an die Kühlungselemente zu.

Es ist daher die Aufgabe der vorliegenden Erfindung, eine verbesserte Halte-und Kühlungsvorrichtung zu schaffen.

Diese Aufgabe wird durch eine Halte- und Kühlungsvorrichtung gemäß Anspruch 1 gelöst. Günstige Ausgestaltungen der Erfindung werden durch die Unteransprüche definiert.

Die vorliegende Erfindung schafft eine Halte- und Kühlungsvorrichtung für zumindest eine Energiespeichereinheit, wobei die Halte- und Kühlungsvorrichtung folgende Merkmale aufweist:
- eine Kühlungsgrundplatte mit einer Mehrzahl von daran stoffschlüssig befestigten Halteelementen, wobei durch zumindest zwei Halteelemente eine Aufnahmetasche für eine Energiespeichereinheit ausgebildet ist; und
- zumindest einem Federelement, das ausgebildet ist, um durch eine Federkraft auf ein Halteelement oder eine in die Aufnahmetasche einsteckbare Energiespeichereinheit diese im eingesteckten Zustand mit zumindest einem Halteelement thermisch zu kontaktieren, wobei ein flächig am Haltelement anordenbares Blech vorgesehen ist, das ausgebildet ist, um in der Aufnahmetasche ein Gehäuse für zumindest eine Energiespeichereinheit zu bilden.

Die vorliegende Erfindung basiert auf der Erkenntnis, dass eine stabile Halterung von Energiespeichereinheiten wie beispielsweise Batterien durch das Vorsehen einer Kühlungsgrundplatte möglich ist, an der stoffschlüssig eine Mehrzahl von Halteelementen befestigt sind, die zumindest eine Aufnahmetasche für eines der Energiespeicherelemente ausbilden. Durch die stoffschlüssige Verbindung zwischen der Kühlungsgrundplatte und den Halteelementen wird ein hoher Wärmetransport von den Energiespeicherelementen zur Kühlungsgrundplatte ermöglicht. Diese stoffschlüssige Verbindung kann beispielsweise durch ein Verlöten oder ein Verschweißen der Kühlungsgrundplatte mit den Halteelementen hergestellt werden, so dass eine metallische Verbindung zwischen der Kühlungsgrundplatte und den Halteelementen ausgebildet wird. Diese metallische Verbindung ermöglicht im Gegensatz zu beispielsweise einer Klebeverbindung eine deutlich verbesserte Wärmeübertragung. Um noch zusätzlich eine Optimierung der Wärmeübertragung von den Energiespeicherelementen zur Kühlungsgrundplatte sicherzustellen, sollte ferner ein Federelement vorgesehen werden, dass auf ein Halteelement oder eine Energiespeichereinheit eine Federkraft ausübt, wenn die Energiespeichereinheit in der Aufnahmetasche angeordnet ist. Durch diese Federkraft kann ein möglichst großflächiger thermisch wirksamer Oberflächenkontakt zwischen einer Oberfläche der Energiespeichereinheit und einem benachbarten Element hin zu zumindest einem über diesen Oberflächenkontakt ermöglicht wird.

Die vorliegende Erfindung bietet somit den Vorteil, dass durch einfache und kostengünstige konstruktive Maßnahmen eine sehr stabile und effiziente Halte-und Kühlungsvorrichtung für zumindest eine Energiespeichereinheit hergestellt werden kann.

In einer günstigen Ausführungsform der Erfindung kann die Mehrzahl der Halteelemente derart angeordnet sein, dass sie eine starre Haltestruktur bilden. Eine derartige Ausführungsform der vorliegenden Erfindung bietet den Vorteil, dass auch Energiespeicherelemente, die keine formstabile Oberfläche aufweisen, stabil und zuverlässig gehalten bzw. gekühlt werden können. Unter einer starrer Haltestruktur ist dabei eine Anordnung zu verstehen, bei der eine Bewegung der Halteelemente gegenüber der Kühlungsgrundplatte bei normalen Betriebstemperaturen nicht möglich ist.

Auch kann die die Kühlungsgrundplatte in einer weiteren Ausführungsform der Erfindung mittels einer Lötung oder einer Schweißung stoffschlüssig mit den Halteelementen verbunden sein. Eine derartige Ausführungsform der vorliegenden Erfindung bietet den Vorteil, dass unter Verwendung von einfachen Herstellungsverfahren ein sehr guter Wärmeübergang zwischen den Halteelementen und der Kühlungsgrundplatte ermöglicht wird.

Günstig ist es auch, wenn die Halteelemente durch wärmeleitfähige Rippen, Wärmerohre und/oder durch Kühl- oder Kältemittel durchströmbare Flach- und/oder Sammelrohre gebildet sind. Auf diese Weise kann eine sehr gute Wärmeableitung von den Halteelementen zur Kühlungsgrundplatte ermöglicht werden.

In einer anderen Ausführungsform der Erfindung kann eine Mehrzahl von Halteelementen je zumindest eine metallische Kontaktfläche aufweisen, die in Bezug zur Kühlungsgrundplatte senkrecht ausgerichtet ist. Eine solche Ausführungsform der vorliegenden Erfindung bietet den Vorteil, dass bei eingesteckten Energiespeicherelementen diese günstigerweise eine Gewichtskraft in Richtung der Kühlungsgrundplatte aufweisen während eine Kraft auf die Oberfläche des Energiespeicherelementes senkrecht zur Gewichtskraft wirkt. Auf diese Weise wird sichergestellt, dass die thermische Anbindung der Oberfläche der Energiespeicherelemente senkrecht zur Richtung der Gewichtskraft erfolgt, so dass bei einer Bewegung der Halte- und Kühlungsvorrichtung (beispielsweise bei der Fahrt eines Fahrzeugs, in dem die Halte- und Kühlungsvorrichtung verbaut ist) eine möglichst ständige thermische Kontaktierung zwischen den Halteelementen und der Oberfläche der Energiespeicherelemente sichergestellt werden kann, die unabhängig von Eigenbewegungen der Halte- und Kühlungsvorrichtung ist.

Auch kann das Federelement ein Kunststoffmaterial, ein Kunststoffschaum-Material oder ein Vlies umfassen. Die Verwendung eines solchen Materials als Federelement ermöglicht eine kostengünstige und zugleich einfache zu montierende Halte-und Kühlungsvorrichtung. Alternativ kann das Federelement ein Metall umfassen und beispielsweise als Tellerfeder ausgeführt sein.

Ferner kann auch das Kunststoffmaterial, das Kunststoffschaum-Material oder das Vlies ein wärmeleitendes und/oder ein elektrisch isolierendes Material umfasst. Durch die Verwendung eines derartigen Materials kann sichergestellt werden, dass einerseits eine gute Wärmeableitung von der Oberfläche des Energiespeicherelements zum Halteelement und andererseits auch eine ausreichend große elektrische Isolation zwischen dem Energiespeicherelement und der Halte-und Kühlungsvorrichtung möglich wird.

Um ein Verrutschen des Energiespeicherelementes bei einer Bewegung der Halte- und Kühlungsvorrichtung sicherzustellen und zugleich das Einfügen der Energiespeicherelemente in die Halte- und Kühlungsvorrichtung zu vereinfachen, ist ein flächig am Halteelement anordenbare Blech vorgesehen das ausgebildet ist, um in der Aufnahmetasche ein Gehäuse für zumindest eine Energiespeichereinheit zu bilden. Dieses Blech kann ferner einen Halteflügel aufweisen, der im Wesentlichen senkrecht zur Kühlungsgrundplatte und im Wesentlichen senkrecht zu einem Halteelement anordenbar sein kann. Eine derartige Ausführungsform der vorliegenden Erfindung bietet den Vorteil, dass eine Energiespeichereinheit zunächst in das Blech mit dem Halteflügel eingeleat wird und dieses Blech dann eingeschoben wird. Auf diese Weise kann eine Beschädigung der Energiespeichereinheit beim Einstecken in die Halte-und Kühlungsvorrichtung vermieden werden und zugleich ein seitliches Herausrutschen des Energiespeicherelementes aus der Halte-und Kühlungsvorrichtung verhindert werden.

In einer weiteren Ausführungsform der Erfindung kann das Blech an einer dem Halteelement zuwendbaren Seite ein Wärmeleitmaterial und an einer der Energiespeichereinheit zuwendbaren Seite ein elektrisches Isolationsmaterial aufweist. Eine solche Ausführungsform der vorliegenden Erfindung ermöglicht bei einem sehr guten Schutz der Energiespeichereinheit beim Einstecken in die Halte-und Kühlungsvorrichtung zugleich auch eine sehr gute Wärmeanbindung der Oberfläche der Energiespeichereinheit zum Halteelement und zugleich eine hohe elektrische Isolation zwischen einem Halteelement und der Energiespeichereinheit.

Auch kann in einer anderen Ausführungsform der Erfindung das Blech eine Falzung an einem Bereich aufweisen, die der Kühlungsgrundplatte zuwendbar ist. Eine derartige Ausführungsform der vorliegenden Erfindung ermöglicht ein einfaches Aufklappen des Bleches zum Einlegen der Energiespeichereinheit und einem nachfolgenden Zusammenklappen des Bleches um die Energiespeichereinheit mit dem Blechgehäuse zwischen die Halteelemente der Halte-und Kühlungsvorrichtung einzuschieben. Eventuelle unbeabsichtigte Verbiegungen werden somit vermieden.

In einer weiteren Ausführungsform der Erfindung kann das Federelement zwischen zwei in einer Aufnahmetasche benachbart anordenbaren Energiespeichereinheiten einfügbar sein. Dies ermöglicht einen kompakten und schnellen Aufbau einer Halte- und Kühlungsvorrichtung mit eingelegten und zumindest einseitig kühlbaren Energiespeicherelementen, wobei trotzdem ein ausreichender Druck durch das Federelement auf die Energiespeicherelemente ausgeübt wird, um einen thermisch wirksamen Kontakt zwischen zumindest einem Halteelement und der Oberfläche der Energiespeichereinheiten zu ermöglichen.

Auch kann das Federelement zwischen der Energiespeichereinheit und einem Halteelement einfügbar sein. Eine derartige Ausführungsform der vorliegenden Erfindung ermöglicht nicht nur eine beidseitige thermische Einkopplung (und somit eine große Kühlfähigkeit) für das Energiespeicherelement sondern auch das Vorsehen von mehreren Federelementen zwischen zwei Halteelementen um somit eine sehr hohe Anpresskraft auf das Energiespeicherelement zu erreichen.

Auch kann in einer anderen Ausführungsform der Erfindung die Kühlungsgrundplatte an einem Stützelement angeordnet sein, das eine Mehrzahl von schlitzförmigen Öffnungen aufweist, die Leiter-förmig angeordnet sind, wobei solche Ausführungsform der Kühlungsgrundplatte an dem Stützelement ermöglicht die sehr einfache uns rationelle Herstellung von vielen gleichförmigen Aufnahmetaschen auf einer Kühlungsgrundplatte, so dass eine effektive Herstellung einer kompakten Halte-und Kühlungsvorrichtung möglich wird.

Zur besseren Ableitung von Wärme aus den Energiespeichereinheiten kann auch die Kühlungsgrundplatte mit Kanälen zur Leitung von Kühl- oder Kältemitteln versehen sein und/oder dass die Kühlungsgrundplatte in thermischer Verbindung mit zumindest einem Rohr zur Leitung von Kühl- oder Kältemitteln angeordnet ist.

Günstige, teilweise erfindungsgemäße Ausführungsbeispiele werden nachfolgend Bezug nehmend auf die beiliegenden Zeichnungen näher erläutert. Es zeigen:
- Fig. 1: eine perspektivische Darstellung einer Halte- und Kühlungsvorrichtung mit starrer Kühlstruktur bei einseitiger Kühlung von Energiespeicherelementen;
- Fig. 2: eine Seitenansicht einer Kombination aus zwei Energiespeicherelementen mit einem die Einheiten umgebenden Schutzblech ;
- Fig. 3: eine schematische Seitenansicht der Kühlungsgrundplatte mit stoffschlüssig verbundenen Halteelementen als starrer Kühlstruktur;
- Fig. 4: eine schematische Seitenansicht einer weiteren Kühlungsgrundplatte mit stoffschlüssig verbundenen Halteelementen als starrer Kühlstruktur;
- Fig. 5A: eine schematische Seitenansicht einer weiteren Kühlungsgrundplatte mit stoffschlüssig verbundenen Halteelementen als starrer Kühlstruktur;
- Fig. 5B-E: schematische Seitenansichten von nicht erfindungsgemäßen Kühlungsgrundplatten mit stoffschlüssig verbundenen Halteelementen Kühlungsstruktur, wobei die Halteelemente Ausgleichsbögen zum Hin- und Herfedern beim Einstecken der Energiespeichereinheiten aufweisen;
- Fig. 6: eine schematische Seitenansicht einer weiteren Kühlungsgrundplatte mit stoffschlüssig verbundenen Halteelementen als starrer Kühlstruktur;
- Fig. 7: eine schematische Seitenansicht einer weiteren Kühlungsgrundplatte mit stoffschlüssig verbundenen Halteelementen als starrer Kühlstruktur;
- Fig. 8: eine schematische Seitenansicht einer weiteren Kühlungsgrundplatte mit stoffschlüssig verbundenen Halteelementen als starrer Kühlstruktur;
- Fig. 9: eine schematische Seitenansicht einer weiteren Kühlungsgrundplatte mit stoffschlüssig verbundenen Halteelementen als starrer Kühlstruktur;
- Fig. 10: eine schematische Seitenansicht eines weiteren Ausführungsbeispiels der von den Erfindung;
- Fig. 11: eine schematische Seitenansicht einer weiteren Kühlungsgrundplatte mit stoffschlüssig verbundenen Halteelementen als starrer Kühlstruktur;
- Fig. 12: eine schematische Seitenansicht zur Wirkungsweise des Federelements;
- Fig. 13: eine schematische Seitenansicht einer weiteren Kühlungsgrundplatte mit stoffschlüssig verbundenen Halteelementen als starrer Kühlstruktur mit darin angeordneten Energiespeichereinheiten;
- Fig. 14A: eine schematische Seitenansicht einer weiteren Kühlungsgrundplatte mit stoffschlüssig verbundenen Halteelementen als starrer Kühlstruktur mit darin angeordneten Energiespeichereinheiten;
- Fig. 14B: eine perspektivische Ansicht einer weiteren Kühlungsgrundplatte mit stoffschlüssig verbundenen Halteelementen, wobei in den Halteelementen U-förmige Kühlmittelleitungen angeordnet sind;
- Fig. 14C: eine perspektivische Ansicht einer weiteren Kühlungsgrundplatte mit stoffschlüssig verbundenen Halteelementen, wobei in den Halteelementen 1-förmige Kühlmittelleitungen angeordnet sind;
- Fig. 15: eine schematische Seitenansicht einer weiteren Kühlungsgrundplatte mit stoffschlüssig verbundenen Halteelementen als starrer Kühlstruktur mit darin angeordneten Energiespeichereinheiten;
- Fig. 16: eine schematische Seitenansicht einer weiteren Kühlungsgrundplatte mit stoffschlüssig verbundenen Halteelementen als starrer Kühlstruktur mit darin angeordneten Energiespeichereinheiten;
- Fig. 17: eine schematische Seitenansicht einer weiteren Kühlungsgrundplatte mit stoffschlüssig verbundenen Halteelementen als starrer Kühlstruktur mit darin angeordneten Energiespeichereinheiten
- Fig. 18: eine schematische Aufsichtdarstellung einer weiteren Kühlungsgrundplatte mit stoffschlüssig verbundenen Halteelementen als starrer Kühlstruktur mit darin angeordneten Energiespeichereinheiten
- Fig. 19: eine Aufsichtdarstellung eines Ausführungsbeispiels einer Leiterförmigen Kühlungsgrundplatte;
- Fig. 20: eine schematische Seitenansicht zur Herstellung der Kühlungsgrundplatte mit darin stoffschlüssig angeordneten Halteelementen;
- Fig. 21: eine Seitenansicht zur Anordnung von Energiespeichereinheiten in der Halte- und Kühlungsvorrichtung mit den stoffschlüssig an einer Kühlungsgrundplatte befestigten Halteelementen; und
- Fig. 22: ein Ablaufdiagramm eines möglichen Verfahrens zur Herstellung einer Halfte- und Kühlungsvorrichtung.

Gleiche oder ähnliche Elemente können in den nachfolgenden Figuren durch gleiche oder ähnliche Bezugszeichen versehen sein, wobei auf eine wiederholte Beschreibung dieser Elemente verzichtet wird. Die nachfolgend eventuell angegebenen Maße und Abmessungen dienen lediglich der Veranschaulichung der Erfindung und sind nicht als Einschränkung der Erfindung auf diese Maße und Dimensionen zu verstehen. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

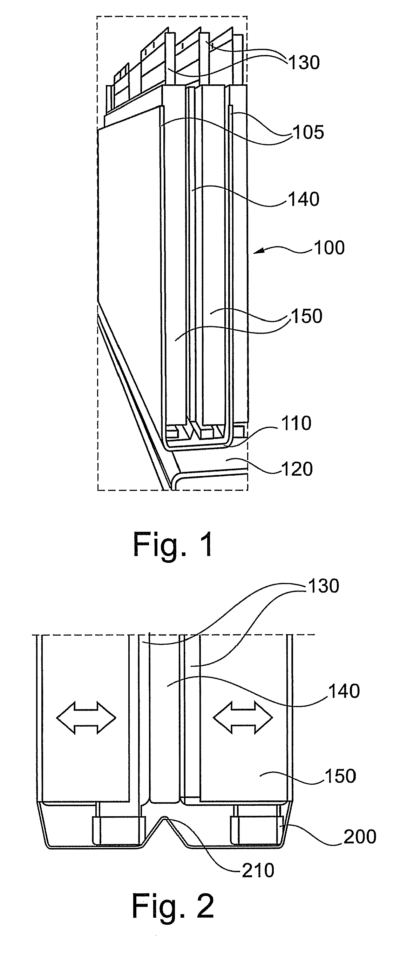

Fig. 1 zeigt eine perspektivische Darstellung einer Halte- und Kühlungsvorrichtung 100 mit starrer Kühlstruktur bei einseitiger Kühlung von Energiespeicherelementen. Diese starre Kühlstruktur, die in Fig. 1 beispielsweise aus wärmeleitenden Rippen als Halteelementen 105 besteht, kann an einer Verbindungsstelle 110 mit einer Kühlungsgrundplatte 120 verbunden sein. Diese Verbindungsstelle 110 kann beispielsweise eine Verlötung der Rippen zur Kühlungsgrundplatte 120 sein, wodurch eine Wärmeleitung sichergestellt ist und zugleich ein Beitrag zur Festigkeit einer Gesamtbatterie geliefert wird. Die Kühlungsgrundplatte 120 kann beispielsweise über Flachrohre gekühlt werden. Zwischen die wärmeleitenden Rippen als Halteelementen 105 können die Energiespeicherelemente 130, beispielsweise (aber nicht ausschließlich) wiederaufladbare Batterie- oder Akkumulatorzellen, eingefügt werden, wobei zwischen einer Oberfläche von zwei Batteriezellen 130 ein Federelement 140 angeordnet sein kann. Dieses Federelement 140 kann beispielsweise ein Vlies sein, das einen Volumenausgleich zwischen den Energiespeicherelementen 130 (hier den Batteriezellen) ermöglicht, einen Anpressdruck der Energiespeicherelemente 130 in Richtung der Halteelement 105 zur Wärmeleitung aufrechterhält und zugleich ein Fügen der einzelnen Zellen 130 ermöglicht. Vor dem Einfügen der Energiespeicherelemente 130 können diese jedoch mit einem vollflächig aufgeklebten Blech 150 als Gehäuse versehen werden, das seitliche Halteflügel aufweist und somit ein Verrutschen der Energiespeicherelemente 130 in der Halte- und Kühlungsvorrichtung verhindert. Dieses Blech 150 kann beispielsweise eine Dicke von 0,2 - 0,3 mm aufweisen, außen mit Wärmeleitmaterial oder -folie und innen elektrisch isolierend beschichtet sein. Ein solches "Vorbehandeln" bzw. Einhausen der Energiespeicherzellen 130 kann sowohl eine hohe Wärmeleitfähigkeit, eine ausreichende Ebenheit und eine ausreichende Isolation der Energiespeicherzellen 130 sicherstellen. Zugleich wird ein niedriger Wärmeleitkoeffizient a für die Schnittstelle zwischen einer Zelle 130 und einer Rippe 105 ermöglicht und zusätzlich ein Schutz der Zellen 130 beim Einfügen in die Kühlstruktur105 sichergestellt.

Fig. 2 zeigt eine Seitenansicht einer Kombination aus zwei Energiespeicherelementen 130, einem dazwischen angeordneten Federelement 140 sowie dem vorzugsweise vollflächig auf die Energiespeichereinheiten 130 aufgeklebten Blech 150 als Gehäuse. Durch die Darstellung aus Fig. 2 wird ersichtlich, dass sich eine laterale Ausdehnung der Speicherzellen 130 beim Be- und Entladen durch das Federelement 140 kompensieren lässt, um trotzdem einen ausreichenden Anpressdruck durch das Federelement 140 auf die Speicherzellen 130 in Richtung zu einem Halteelement 105 sicherzustellen. Ferner kann das Blech 150 auch Einführschrägen 200 umfassen, um ein leichteres Einfügen des Verbunds aus Fig. 2 zwischen die Halteelemente 105 aus Fig. 1 zu ermöglichen. Zugleich kann eine Falzung 210 an einem Bereich des Blechs 150 vorgesehen sein, der der Kühlungsgrundplatte 120 nach dem Einfügen zugewandt ist. Diese Falzung 210 hin lateral im Bereich des Federelements 140 angeordnet sein, um als "Scharnier" zum Öffnen des durch das Blech 150 gebildeten Gehäuses beim Einlegen der Speicherzellen 130 zu wirken. Zugleich kann die Falzung 210 als "Dehnungsfuge" zur Federung oder zum Volumenausgleich des Gehäuses beim Einfügen zwischen die Halteelemente 105 oder während des Betriebs dienen.

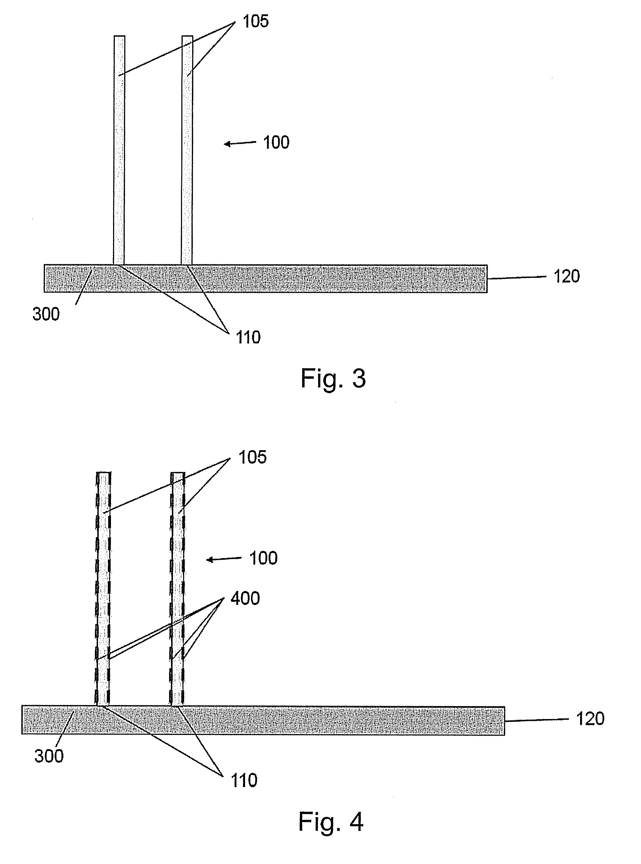

Fig. 3 zeigt eine schematische Seitenansicht der Kühlungsgrundplatte 120 mit stoffschlüssig verbundenen Halteelementen 105 als starrer Kühlstruktur. Die stoffschlüssige Verbindung 110 kann dabei wiederum eine Lötung zwischen den Halteelementen 105 und der Kühlungsgrundplatte 120 sein. Die Kühlungsgrundplatte 120 kann zum Beispiel innenliegende Kanäle 300 zu Leitung von Kühl- oder Kältemittel umfassen.

Fig. 4 zeigt eine schematische Seitenansicht der Kühlungsgrundplatte 120 mit stoffschlüssig verbundenen Halteelementen 105 als starrer Kühlstruktur. Im Gegensatz zu der Darstellung aus Fig. 3 können nun die Halteelemente 105, die beispielsweise wieder aus wärmeleitfähigen Rippen bestehen, eine oder mehrere Schnittstellen 400 zwischen den Halteelementen 105 und zwischen den Halteelementen 105 einzufügenden Speicherzellen aufweisen, die günstigerweise große metallisches Flächen umfassen und die bevorzugt senkrecht zur Kühlungsgrundplatte 120 angeordnet sind. Hierdurch kann eine seitliche Anpresskraft erreicht werden, die senkrecht zu einer Gewichtskraft wirkt. Auf diese Weise kann erreicht werden, dass bei einer Bewegung der Halte- und Kühlungsvorrichtung die Trägheit der Speicherzellen 130 kein Federn dieser Zellen 130 in der Halte- und Kühlungsvorrichtung 100 bewirkt, die einen thermisch wirksamen Oberflächenkontakt zwischen den Halteelementen 105 und der Oberfläche der Zellen 130 unterbrechen würde.

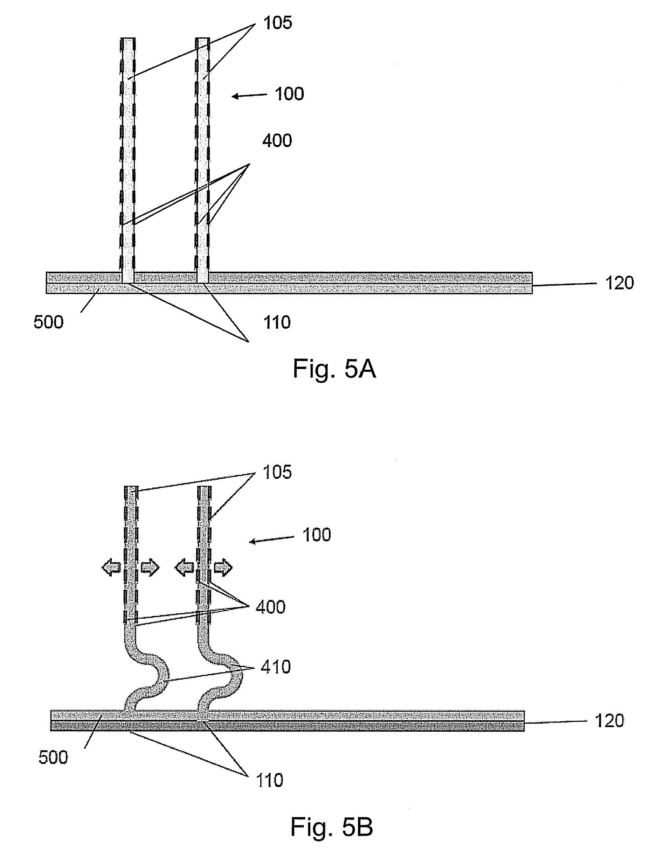

Fig. 5A zeigt eine schematische Seitenansicht einer weiteren Kühlungsgrundplatte 120 mit stoffschlüssig verbundenen Halteelementen 105 als starrer Kühlstruktur. Gegenüber der Darstellung aus Fig. 4 kann gemäß dem Ausführungsbeispiel nach Fig. 5A beispielsweise eine Kühlung der Kühlungsgrundplatte 120 über angelötete Rohre 500, beispielsweise Flachrohre, erfolgen.

In Fig. 5B ist eine schematische Seitenansicht einer weiteren Kühlungsgrundplatte 120 mit stoffschlüssig verbundenen Halteelementen 105 als starrer Kühlstruktur wiedergegeben. Entgegen dem in Fig. 5A dargestellten Ausführungsbeispiel der vorliegenden Erfindung sind nun die Halteelemente 105 über bogenförmige Verbindungselemente 410 und beispielsweise eine Löt- oder Schweißverbindung 110 mit der Kühlungsgrundplatte 120 verbunden. In Fig. 5B ist dabei ein Ausführungsbeispiel gezeigt, in dem die bogenförmigen Verbindungselemente 410 einen Bogen aufweisen, der parallel zur Erstreckungsrichtung der Kühlungsgrundplatte 120 ausgebildet ist. Diese bogenförmigen Verbindungselemente 410, die im für einen ähnlichen Einsatz im Heizungsbau verwendet werden und dort als "Lyra"-Bögen bezeichnet werden, ermöglichen einen Toleranz- und einen Dehnungsausgleich beim Einfügen der Energiespeichereinheiten, die beispielsweise in Form von Hardcasezellen ausgebildet sind. Beim Einfügen der Energiespeichereinheiten lassen sich somit die Halteelemente 105 entsprechende den in Fig. 5B eingezeichneten Pfeilen leicht bewegen, so dass das Platzieren diese Energiespeichereinheiten zwischen die Halteelemente 105 vereinfacht wird.

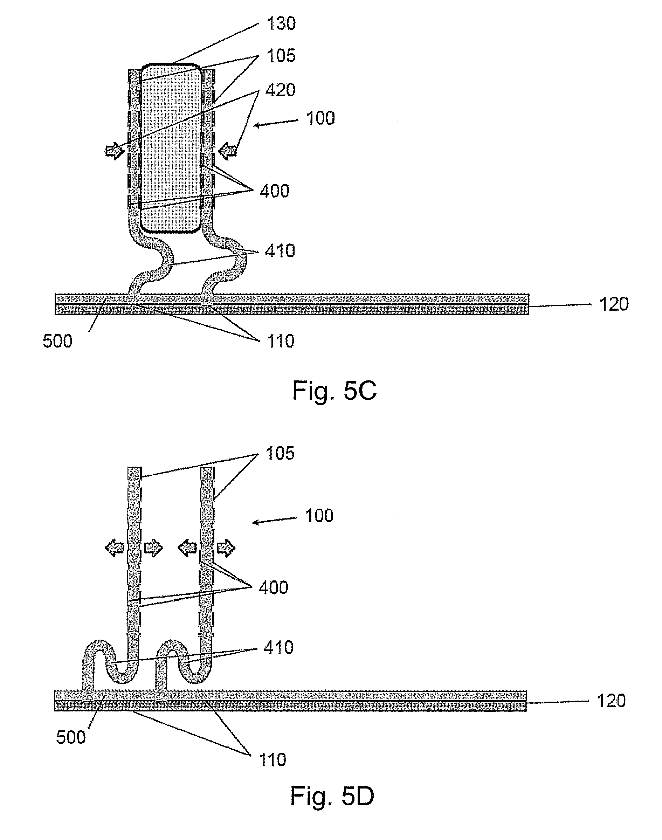

In Fig. 5C ist eine schematische Seitenansicht einer nicht erfindungsgemäßen Kühlungsgrundplatte 120 mit stoffschlüssig verbundenen Halteelementen 105 als starrer Kühlstruktur wiedergegeben. Die Fig. 5C zeigt dabei eine Anordnung, die sich ergibt, wenn eine Energiespeichereinheit 130, beispielsweise eine Batteriezelle, in die Anordnung gemäß Fig. 5B eingefügt wird. Um nun den thermischen Kontakt dauerhaft sicherzustellen, sollten die Halteelemente 105 von außen an die Energiespeicherzelle 130 angedrückt werden (was durch die Pfeile 420 in Fig. 5B verdeutlicht wird). Hierzu kann beispielsweise ein Federband verwendet werden, das als Federelement 140 wirkt.

In Fig. 5D ist eine schematische Seitenansicht einer weiteren Kühlungsgrundplatte 120 mit stoffschlüssig verbundenen Halteelementen 105 als starrer Kühlstruktur wiedergegeben. Im Gegensatz zur Darstellung aus Fig. 5B ist nun der Bogen der bogenförmigen Verbindung 410 senkrecht zu Erstreckungsrichtung der Kühlungsgrundplatte 120 ausgerichtet, so dass ein Toleranz- und Dehnungsausgleich beim Einstecken der Energiespeicherzellen 130 ermöglicht wird. Auch eine derartige Ausgestaltung der Bogenanordnung bietet somit Vorteile durch eine Erleichterung beim Einstecken der entsprechenden Batteriezellen. Durch das Verwenden der Bögen 410, entweder parallel oder senkrecht zur Erstreckungsrichtung der Kühlungsgrundplatte 120 können auch geringfügige Ausdehnungen der Energiespeichereinheiten 130 im Betrieb aufgenommen werden, so dass eine geringere Materialbeanspruchung des Materials der Halte- und Kühlungsvorrichtung gegenüber einer starren Verbindung zwischen den Halteelementen 105 und der Kühlungsgrundplatte 120 resultiert. Dies wiederum führt zu einer verlängerten Lebensdauer der Halte- und Kühlungsvorrichtung.

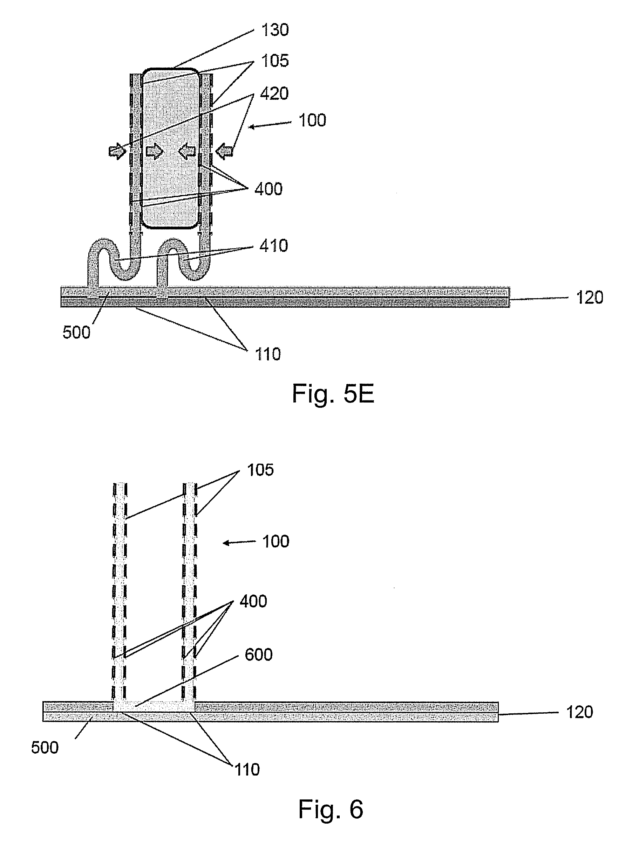

In Fig. 5E ist eine schematische Seitenansicht einer weiteren, nicht erfindungsgemäßen Kühlungsgrundplatte 120 mit stoffschlüssig verbundenen Halteelementen 105 als starrer Kühlungsstruktur wiedergegeben. In Fig. 5E ist nun der der eingesteckte Zustand der Energiespeichereinheit 130 in die Anordnung aus Fig. 5D abgebildet. Dabei sollte wiederum ein (durch die Pfeile 420 angedeuteter) Druck auf die Halteelemente 105, beispielsweise mittels eines Federbandes, ausgeübt werden, das dann ebenfalls als Federelement 140 wirkt. Dieses Federband kann auch von außen um die Halteelemente 105 angebracht werden, damit ein thermischer Kontakt zwischen Energiespeichereinheit 130 und den Halteelementen 105 dauerhaft sichergestellt werden kann.

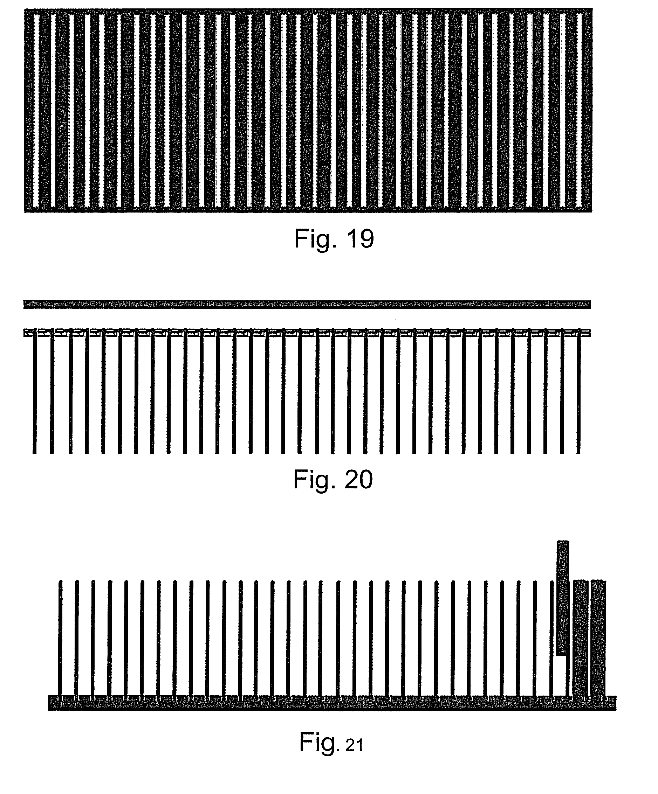

Fig. 6 zeigt eine schematische Seitenansicht einer weiteren Kühlungsgrundplatte 120 mit stoffschlüssig verbundenen Halteelementen 105 als starrer Kühlstruktur. Wie in Fig. 6 dargestellt ist, können die beiden Halteelemente 105 auch Schenkel eines U-förmigen Profils 600 sein, welches beispielsweise in schlitzförmige Öffnungen eines Stützelementes an der Kühlungsgrundplatte 120 eingesteckt wurden. Zu einem derartigen Ausführungsbeispiel unter Verwendung eines solchen Stützelementes mit schlitzförmigen Öffnungen werden nachfolgend noch nähere Ausführungen mit Bezug zu den Figuren 19 bis 21 gemacht. Die Verbindung 110 zwischen dem U-förmigen Profil 600 und der Kühlungsgrundplatte 120 kann wieder eine Lötverbindung (oder auch eine Schweißverbindung) sein.

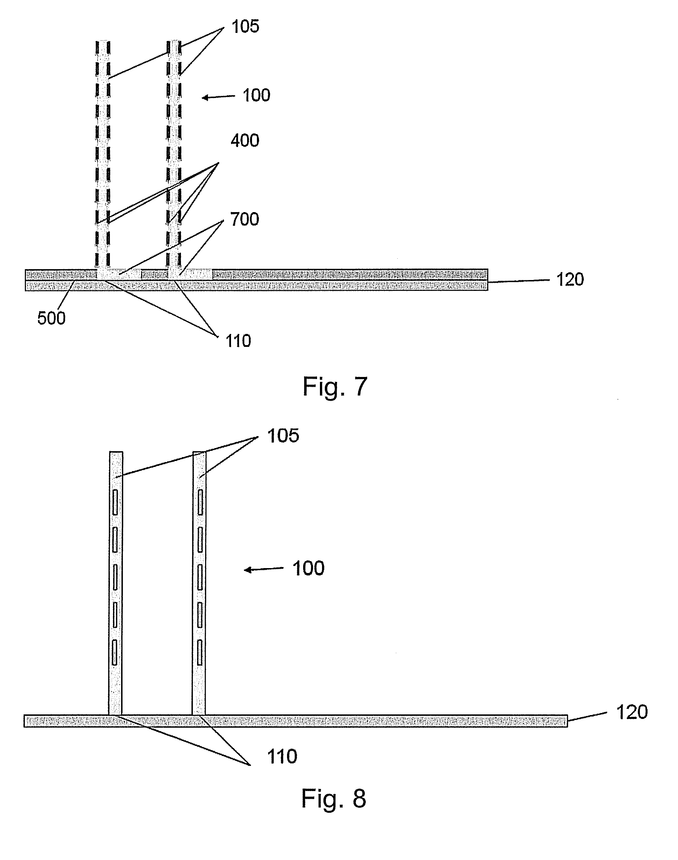

Fig. 7 zeigt eine schematische Seitenansicht einer weiteren Kühlungsgrundplatte 120 mit stoffschlüssig verbundenen Halteelementen 105 als starrer Kühlstruktur. Im Gegensatz zur Darstellung aus Fig. 6 können die Halteelemente 105, die in den vorstehend beschriebenen Figuren als wärmeleitfähige Rippen ausgebildet sind, auch L-förmige Profile 700 sein. Die stoffschlüssige Verbindung 110 kann auch wieder eine Lötungsverbindung mit der Kühlungsgrundplatte 120 sein.

Fig. 8 zeigt eine schematische Seitenansicht einer weiteren Kühlungsgrundplatte 120 mit stoffschlüssig verbundenen Halteelementen 105 als starrer Kühlstruktur. Im Gegensatz zu den vorhergehenden Darstellungen können gemäß dem Ausführungsbeispiel nach Fig. 8 die Halteelemente 105 aus Flachrohren oder geprägten Blechen bestehen. Stirnseitige Sammler oder Verteiler zur Zu- oder Ableitung von Kühl- oder Kältemitteln sind in Fig. 8 nicht dargestellt. Eine Anordnung gemäß Fig. 8 aus direkt mit Kühlmedium (Kühlmittel) gekühlten Halteelementen 105 oder in einer alternativen Ausführung als Wärmerohre (Heatpipes) bietet den Vorteil, dass eine starke Kühlung der Speicherzellen möglich wird und zugleich eine Kühlstruktur mit Sammel- bzw. Verteilrohren dicht verlötet werden kann.

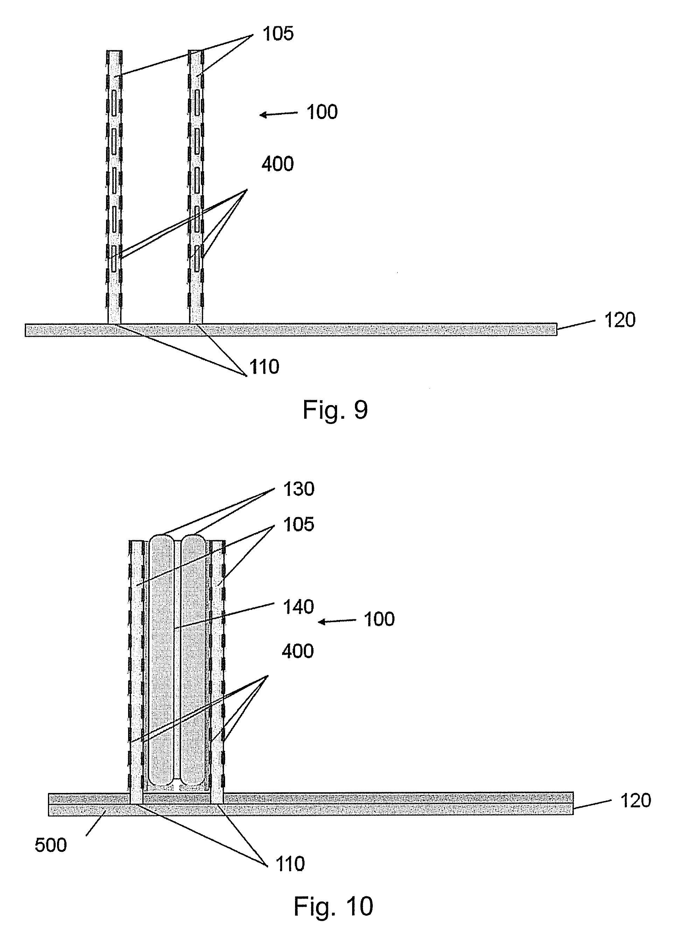

Auch kann eine Kombination der Ausführungsbeispiele von Teilen der Erfindung gemäß Fig. 8 und Fig. 4 realisiert werden, wie es in der schematischen Seitenansicht aus Fig. 9 wiedergegeben ist.

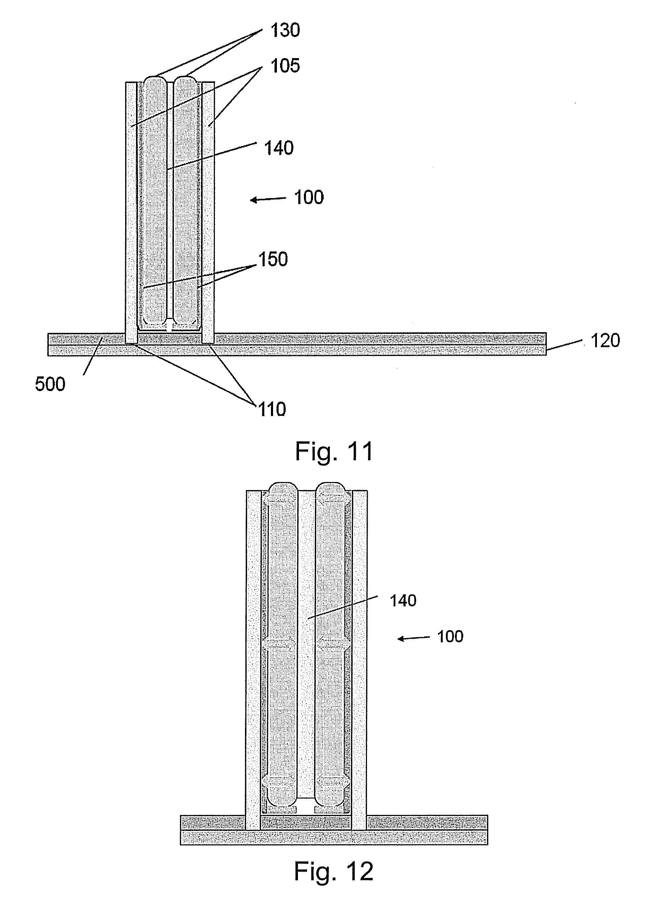

Fig. 10 zeigt eine Seitenansicht eines weiteren Ausführungsbeispiels der von den Erfindung, wobei nun zwei Energiespeicherelemente 130 (bzw. Batteriezellen) zwischen den beiden Halteelementen 105 angeordnet sind. Die beiden Halteelementen 105 weisen dabei thermische Ankopplungsschnittstellen 400 gemäß dem in Fig. 4 dargestellten Ausführungsbeispiel auf. Durch die Darstellung nach Fig. 10 wird ersichtlich, dass die Energiespeichereinheiten 130 auch nur einseitig gekühlt werden können, wobei zwischen den beiden Speicherzellen 130 das vorstehend genannte Federelement 140 angeordnet sein kann. Auch können die beiden Batteriezellen 130 durch ein vorzugsweise vollflächig aufgeklebtes Blech 150 umgeben sein, welches seinerseits eine Wärmeleitung, eine Ebenheit und auch eine ausreichende elektrische Isolation sicherstellt. Eine solche Konfiguration ist in Fig. 11 als schematische Seitenansicht dargestellt.

Aus Fig. 12 wird diese Wirkungsweise des Federelements 140 in Betrieb der Halte- und Kühlungsvorrichtung 100 ersichtlich. Werden die Batteriezellen 130 geladen bzw. entladen, können sich diese Zellen 130 durch interne chemische Vorgänge lateral ausdehnen oder zusammenziehen. Durch das Federelement 140 wird sichergestellt, dass trotz einer solchen lateralen Ausdehnung bzw. einem solchen lateralen Zusammenziehens ein ausreichender Anpressdruck auf die Speicherzellen 130 ausgeübt wird, so dass eine gute Wärmeleitung von den Oberflächen der Speicherzellen 130 zu den Halteelementen 105 möglich wird.

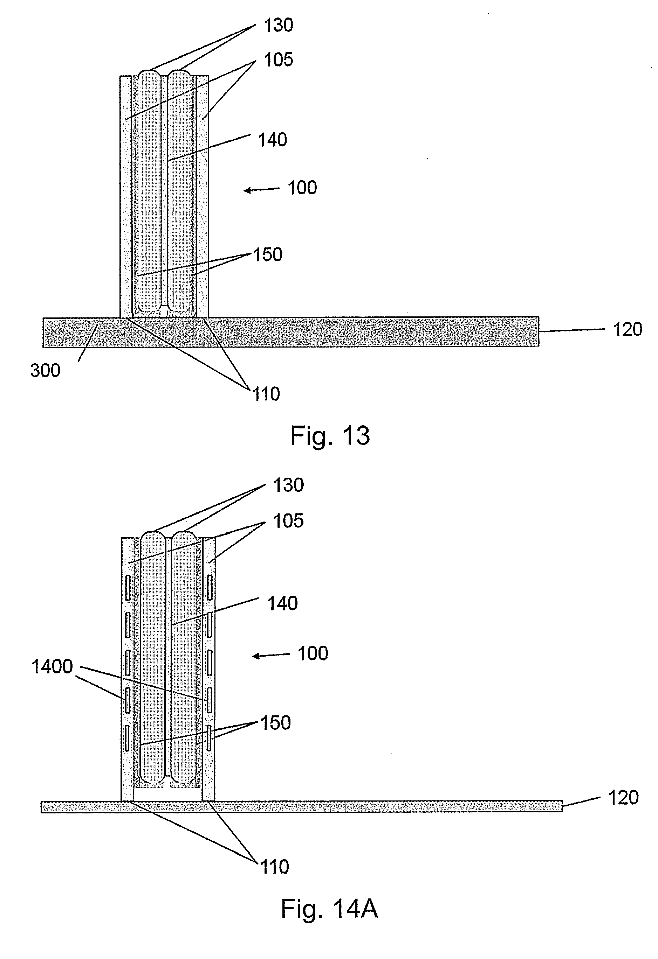

Alternativ zu einem Ausführungsbeispiel gemäß Fig. 11, bei dem eine Kühlung der Kühlungsgrundplatte 120 beispielsweise über angelötete Rohre 500 erfolgt, kann in einem weiteren Ausführungsbeispiel auch eine Kühlungsgrundplatte 120 verwendet werden, in die innenliegende Kanäle 300 zur Führung eines Kühl- oder Kältemittels aufweist. Ein solches Ausführungsbeispiel ist exemplarisch durch die in Fig. 13 dargestellte schematische Seitenansicht wiedergegeben.

Alternativ oder zusätzlich können auch direkt gekühlte Elemente oder Komponenten 1400 der Halteelemente 105 vorgesehen sein, die beispielsweise von Kühlmittel geflossen sind oder eine Heatpipe (Wärmerohr) bilden. Ein solches Ausführungsbeispiel ist durch die in Fig. 14A dargestellte schematische Seitenansicht wiedergegeben.

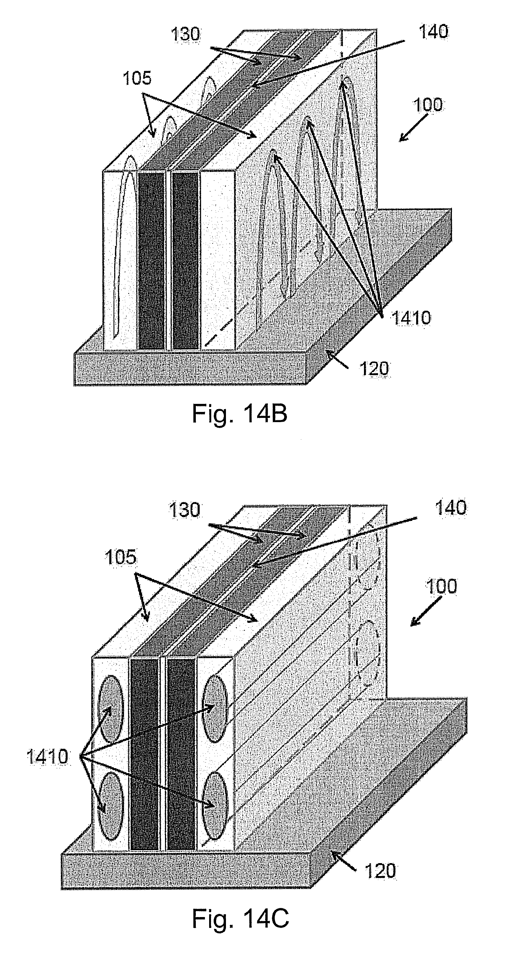

In der Fig. 14B ist eine perspektivische Ansicht einer weiteren Kühlungsgrundplatte mit stoffschlüssig verbundenen Halteelementen 105 wiedergegeben, wobei in den Halteelementen 105 U-förmige Kühlmittelleitungen angeordnet sind.

Von Kühlmittel 1410 durchströmte Kühl- bzw. Halteelemente 105 bieten dabei einen vorteilhaft geringen Temperaturabstand zwischen Batterieoberfläche und Kühlmitteltemperatur. Die U-förmigen Leitungen im Halteelement (auch als "U-Flow"-Design des Halteelementes bezeichnet) ermöglichen vorteilhaft geringe Temperaturunterschiede auf der Oberfläche der (Halte-) Elemente. Die vertikalen Kühl-bzw. Halteelemente 105 sind mit der unten liegenden Kühlungsgrundplatte 120 insbesondere dicht verlötet. Die "U-Flow"-Kanäle werden dabei aus der Kühlplatte 120 gespeist. Die Kühlplatte 120 übernimmt somit hauptsächlich eine Verteiler-, Sammler- und Tragwerkfunktion.

In der Fig. 14C ist eine perspektivische Ansicht einer weiteren Kühlungsgrundplatte mit stoffschlüssig verbundenen Halteelementen wiedergegeben, wobei in den Halteelementen 1-förmige Kühlmittelleitungen angeordnet sind. Die von Kühlmittel 1410 durchströmten Kühl- bzw. Halteelemente 105 bieten hier ebenfalls einen vorteilhaft geringen Temperaturabstand zwischen Batterieoberfläche und Kühlmitteltemperatur, wobei nun das "I-Flow"-Design einen vorteilhaft einfachen Aufbau der starren Kühlstruktur aus Rohren und Sammlern (nicht dargestellt) ermöglicht. Die vertikalen Kühl- bzw. Halteelemente 105 sind günstigerweise mit stirnseitigen Sammlern (die in Fig. 14C nicht dargestellt sind) und optional der Kühlungsgrundplatte 120 dicht verlötet. Die Kühlungsgrundplatte 120 übernimmt wiederum hauptsächlich eine Tragwerkfunktion.

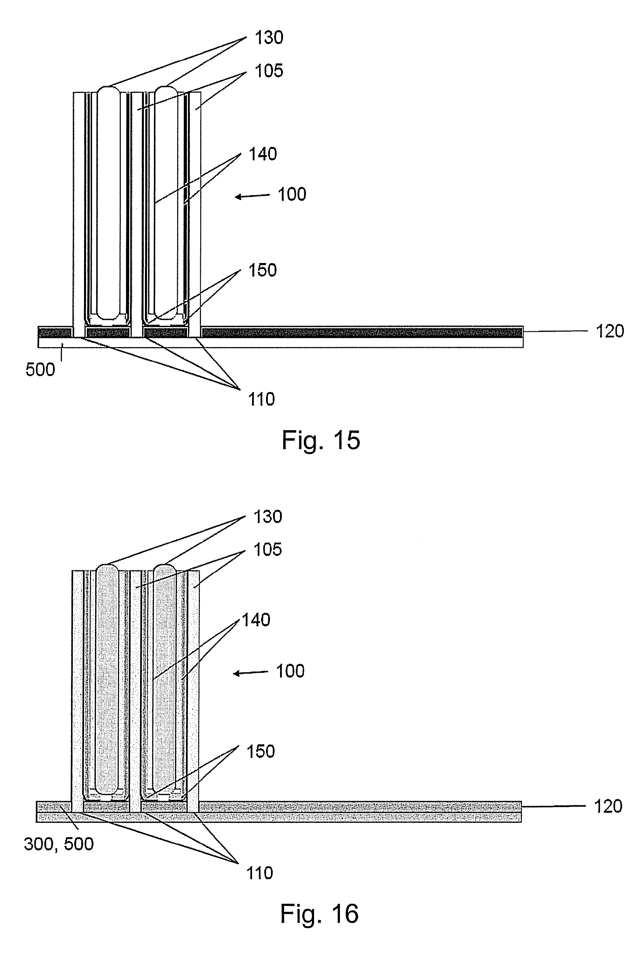

In den vorstehend beschriebenen Ausführungsbeispielen wurde insbesondere eine einseitige Kühlung der Speicherzellen 130 vorgestellt. Es ist jedoch auch möglich, dass gemäß einer anderen Gruppe von Ausführungsbeispielen eine beidseitige Kühlung der Speicherzellen 130 erfolgt. Ein erstes Ausführungsbeispiel aus dieser Gruppe ist in Fig. 15 als schematischer Seitenansicht wiedergegeben. Die einzelnen Batterie- bzw. Speicherzellen 130 können dabei beidseitig von Federelementen 140 umgeben sein, die beispielsweise aus einem wärmeleitfähigen und/oder elektrisch isolierenden Kunststoffmaterial gebildet sind.

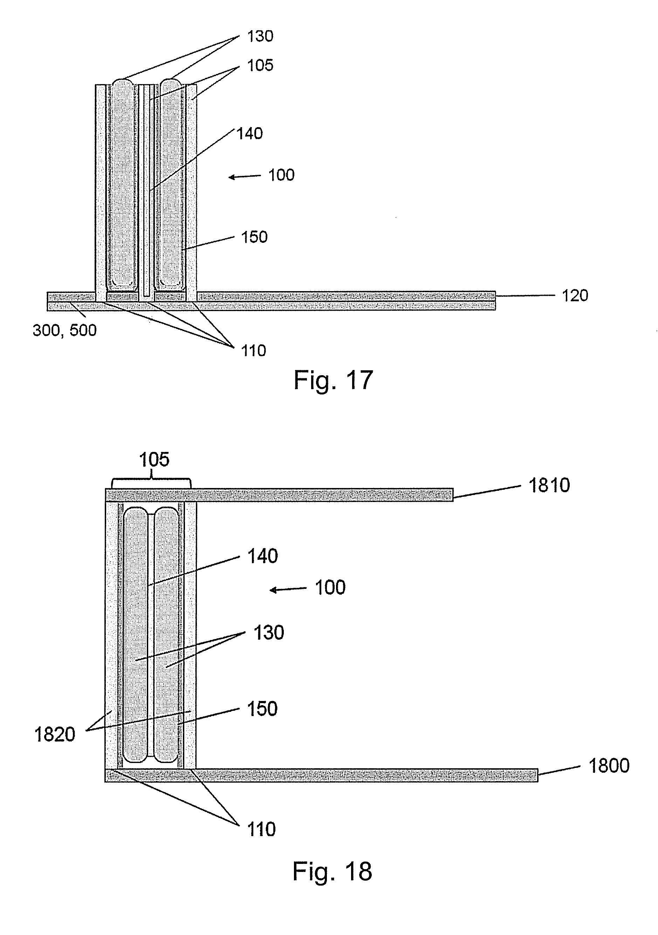

Auch müssen die in Federelemente 140 nicht zwischen den Batteriezellen 130 und den Halteelementen 105 angeordnet sein, sondern können auch als Zwischenlage in den Halteelementen 105 vorgesehen sein. Ein derartiges Ausführungsbeispiel der vorliegenden Erfindung ist in Fig. 16 als schematische Seitenansicht wiedergegeben. Bei einem Verbau der Federelemente 140 zwischen unterschiedlichen Lagen der Halteelemente 105 werden diese Lagen der Halteelemente 105 auseinander gedrückt, so dass auch ein ausreichender Anpressdruck zwischen den (äußeren Lagen der) Halteelementen 105 und den Energiespeicherzellen 130 zur guten Wärmeleitung sichergestellt ist. Auch muss nicht jedes der einzelnen Halteelemente 105 die entsprechenden Federelemente 140 enthalten, sondern es können abwechselnd Halteelemente 105 mit und ohne Federelemente 140 vorgesehen sein. Durch den Druck der Federelemente 140 nach beiden Seiten kann somit auch eine sichere thermische Kontaktierung der benachbarten Batteriezellen 130 mit den entsprechenden Halteelementen 105 (auch auch ohne die jeweiligen Federelemente 140 in allen Halteelementen 105) sichergestellt werden. Eine solche abwechselnde Anordnung von Halteelementen 105 mit und ohne Federelemente 140 ist in Fig. 17 dargestellt.

Fig. 18 zeigt eine schematische Aufsichtdarstellung eines Ausführungsbeispiels der vorliegenden Erfindung mit einseitiger thermischer Anbindung der Speicherzelle 130 an die Halteelemente 105. Dabei können die Halteelemente 105 derart ausgestaltet sein, dass sie einen Kühlmittelfluss ermöglichen und an einem ersten Ende der Kühlungsgrundplatte ein Kühlmittelzufluss über einen Kontakt zu einem Verteilrohr 1800 ermöglichen. An einem zweiten Ende der Kühlungsgrundplatte kann ein Kühlmittelabfluss über einen Kontakt der Halteelemente 105 zu einem Sammelrohr 1810 ermöglicht werden, so dass einen Kühl- oder Kältemittel von Verteilrohr 1800 über Kanäle in den Halteelementen 105 zum Sammelrohr 1810 geleitet wird und hierdurch eine optimale Wärmeabfuhr von den Batteriezellen 130 über die Halteelemente 105 sichergestellt ist. Eine Kühlung wird somit über durchströmte Elemente 1820 in den Halteelementen 105 sichergestellt.

In den Darstellungen aus den Figuren 19 bis 21 wird der Aufbau einer Kühlungsgrundplatte 120 mit daran stoffschlüssig angeordneten Halteelementen 105 beispielshaft dargestellt. Die herzustellende Halte- und Kühlungsvorrichtung kann dabei für galvanische Zellen, insb. Li-Ionen Zellen verwendet werden, die an einem Kühlblech als Halteelement 105 angebracht werden, welches stoffschlüssig mit der Wärmesenke verbunden ist. Die stoffschlüssige Verbindung zwischen Kühlblech und Wärmesenke verbessert den Wärmeübergang. Die Verbindung zwischen Kühlblech und Wärmesenke wird bereits vor der Montage der Zellen hergestellt. Dadurch kann ein stoffschlüssiges Verfahren verwendet werden (z.B. Löten), welches einen optimalen Wärmeübergang gewährleistet. Anschließend werden die Zellen an die Kühlbleche angebracht und unterliegen somit keiner thermischen Belastung mehr.

Mit Hilfe eines zusätzlichen Bauteils, nämlich eines Rechens, ist es möglich, alle Kühlbleche ohne großen Aufwand und zusätzliche Hilfsmittel, wie aufwendige Lötgestelle, einfach herzustellen. Der Rechen dient dabei im Wesentlichen als Stütze für die Halterung der Kühlbleche 105 während der Lötung.

Die Kühlbleche 105 sind beispielsweise an ihrem Anbindungspunkt zur Kühlplatte 120 mit einer 90° Abkantung gestaltet. Alle Kühlbleche 105 werden mit Orientierung nach unten in eine leiterförmige Platte, den Rechen, eingehängt, wie sie in Fig. 19 dargestellt ist. Die Kühlplatte 120 wird beispielsweise von oben montiert und der Aufbau verlötet (entsprechend der in Fig. 20 dargestellten Vorgehensweise). Die Anordnung wird nach dem Verlöten und Abkühlen gedreht, so dass sich die Kühlplatte 120 unten befindet und die Kühlbleche 105 nach oben "rechenförmig" herausragen. Zwischen den Kühlblechen 105 werden anschließend die Zellen 130 montiert, wie dies aus der Darstellung nach Fig. 21 ersichtlich wird.

Der Rechen ist von der Gestalt eines Kühlerbodens, d.h. er besitzt Durchzüge, die ein Einfädeln der Kühlbleche 105 erleichtern und ein fest tolerierbares Teilungsverhältnis der Kühlbleche 105 vorgeben. Der Rechen selbst kann lotplattiert sein, wird jedoch vorzugsweise über eine Lotplattierung am Kühler bzw. ein Zwischenblech, die auch die Kühlbleche 105 mit anbindet, verlötet.

Der Rechen wird günstigerweise als kostengünstiges Stanzbiegebauteil ausgeführt. Der Rechen kann auch an seiner Außenkontur einen Abbug aufweisen, damit keine scharfen Kanten in Zellrichtung hineinragen und somit eine Minimierung des Risikos mechanischer Beschädigungen beim Einfügen resultieren, die und elektrischer Durchschläge verursachen könnten.

Statt einem Verlöten kann auch ein anderes stoffschlüssiges Verfahren, wie beispielsweise ein Kleben angewandt werden. Durch die stoffschlüssige Verbindung der Halteelemente 105 und der Kühlungsgrundplatte 120 kann eine optimale Wärmeübertragung ohne thermische Beeinträchtigung der Zelle erreicht werden. Zugleich ist eine einfache Herstellbarkeit sichergestellt.

Durch das Vorsehen eines solchen "Rechens" können mehrere Effekte erreicht werden. Zunächst kann eine Vorgabe eines festen Teilungsverhältnisses für Batteriekühlbleche realisiert werden. Weiterhin werden auch eine Kassettierhilfe und ein Niederhalter für abgewinkelte Kühlbleche auf einer Kühlplatte ermöglicht. Schließlich kann durch den hier vorgeschlagenen Aufbau noch eine Vereinfachung des notwendigen Lötgestells und eine Verkürzung der Lötzeiten durch eine reduzierte Masse der Lötvorrichtung erreicht werden.

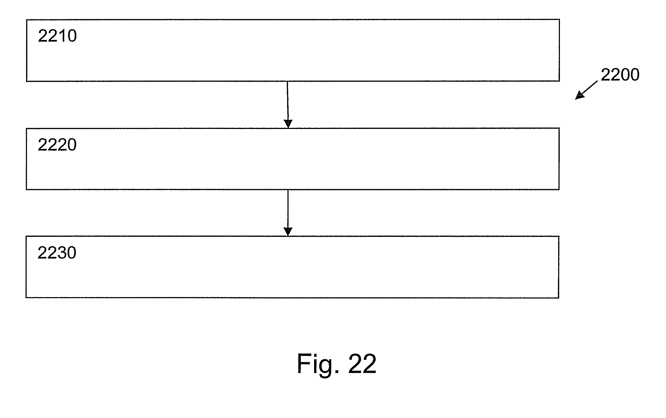

Ein nicht erfindungsgemäßes Verfahren 2200 zur Herstellung einer Halte- und Kühlungsvorrichtung kann gemäß dem Ablaufdiagramm nach Fig. 22 geschaffen werden, wobei das Verfahren 2200 einen Schritt des Anordnens 2210 von einer Mehrzahl von Halteelementen an einer Kühlungsgrundplatte aufweist, wobei durch zumindest zwei Halteelemente eine Aufnahmetasche für ein Energiespeicherelement ausgebildet wird. Weiterhin umfasst das Verfahren einen Schritt des stoffschlüssigen Verbindens 2220 der Halteelemente mit der Kühlungsgrundplatte und einen weiteren Schritt des Bereitstellens 2230 eines Federelements zum Anordnen zwischen den Halteelementen, um durch eine Federkraft auf ein Halteelement oder eine in die Aufnahmetasche einsteckbare Energiespeichereinheit diese im eingesteckten Zustand kraftschlüssig mit zumindest zwei Halteelementen thermisch zu kontaktieren.

Zusammenfassend ist anzumerken, dass die vorliegende Erfindung ein geeignetes Batteriekühlungskonzept wiedergibt, das auch ausreichend Überlegungen zur Herstellbarkeit und Festigkeit berücksichtigt. Einerseits wird es dabei als vorteilhaft angesehen, die Bauelemente, die zur Kühlung dienen (z.B. wärmeleitende Rippen oder von einem Kühlmedium durchströmte Bauteile) günstigerweise in einer starren Anordnung auszuführen, da dies die Möglichkeit bietet die Bauteile komplexer Kühlstrukturen kostengünstig z.B. über einen Lötprozess dicht bzw. mit guter Wärmeleitung und Festigkeit zu verbinden. Weiterhin bietet der hier vorgestellte Ansatz die Möglichkeit, die Kühlstruktur als Tragstruktur in die Festigkeit der Gesamtbatterie einzubeziehen.

Andererseits können die Zellen nicht im Lötprozess mitgefügt werden, d.h. ein nachträglicher Einbau der Batteriezellen sollte ermöglicht werden. Nach dem Fügen sollte ein möglichst guter Wärmeübergang zwischen den Zellen und der Kühlstruktur bestehen. Dies wird durch den Umstand erschwert, dass sich das Volumen der Zellen beim Be- und Entladen ändert. Dadurch kann sich der Wärmeübergang zu angrenzenden Bauteilen erheblich verändern.

Die hier vorgestellte Lösung sieht daher vor, Batteriezellen mit einer starren Kühlstruktur über Federelemente beispielsweise dauerelastisch zu verbinden und dabei eine möglichst große, bevorzugt senkrechte Fläche nahe der Batterieoberfläche als Schnittstelle (d.h. Trennung zwischen Batterie und Kühlstruktur) einzusetzen.

Die dauerelastischen Federelemente können dabei, z.B. bei einseitiger Kühlung zwischen den Batteriezellen angeordnet sein, direkt auf der Oberfläche der Batteriezelle oder auf der Oberfläche der starren Kühlstruktur angeordnet sein.

Je nach Bauart der Batteriezelle wird für Zellen, die keine formstabile Oberfläche aufweisen (z.B. sogenannte Pouch- bzw. Coffeebag-Zellen) zusätzlich eine formstabile Zwischenschicht z.B. ein dünnwandiges Blechgehäuse zwischen Batterie und Kühlstruktur vorgeschlagen. Dieses dient einerseits dem Schutz der Batteriezelle beim Einbringen in die Kühlstruktur, andererseits kann durch die Gestaltung der Form, z.B. mittels Einführschrägen bzw. definierten Befestigungspunkten das Fügen erleichtert und die gewünschte Position gesichert werden. Die formstabile Oberfläche bietet Vorteile hinsichtlich der erzielbaren Ebenheit und unterstützt damit den Kontakt respektive Wärmeübergang zur Kühlstruktur. Auf der Außenseite (d.h. zu Kühlstruktur hin) ist eine Wärmeleitbeschichtung vorteilhaft, auf der Innenseite (d.h. zur Batterie hin) ist eine elektrische Isolierung vorteilhaft.

Die hier vorgestellte Lösung ist unabhängig von der Art der Wärmeabfuhr in der Kühlstruktur, d.h. die mittels einer Lötung hergestellte starre bzw. dichte Anordnung kann aus
a) wärmeleitenden Rippen bestehen, oder aus
b) einem Kühlmittel führenden Konstruktionssystem, z.B. aus Flach- und Sammelrohren,
c) aus Wärmerohren (Heatpipes) oder
d) aus den möglichen Kombinationen von a), b) und c) bestehen.

Für die Ausführung der dauerelastischen Federn können metallische Federn oder auch Kunststoffe bzw. Kunststoffschäume zum Einsatz kommen, bevorzugt Kunststoffe die wärmeleitend und elektrisch isolierend sind.

Der hier vorgeschlagene Ansatz bietet dabei mehrere Vorteile. Zum ersten kann eine starre Kühlstruktur realisiert werden, auch wenn sie aus komplexen Einzelteilen wie Sammelrohren, Flachrohren, geprägten Blechen, Haltern, Träger- oder Federelementen in einem Lötprozeß zusammengefügt werden. Ferner weisen gelötete Kühlstrukturen dauerhaft eine gute Dichtheit auf. Je nach konstruktiver Ausführung weisen gelötete Kühlstrukturen zusätzlich auch eine dauerhaft gute Wärmeleitfähigkeit bzw. Festigkeit der Bauteile untereinander auf, wobei sich gelötete Kühlstrukturen bei hohen Stückzahlen verhältnismäßig kostengünstig in einem Serienprozess herstellen lassen.

Eine große Fläche für die unumgängliche Montage- bzw. Füge-Schnittstelle zwischen Kühlstruktur und Batteriezelle ist vorteilhaft, da an der Schnittstelle normalerweise keine stoffschlüssige Verbindung erreicht werden kann. Ein deswegen verschlechterter Wärmeübergang "k" zwischen Batterie und Kühlstruktur kann aufgrund der Proportionalität des Wärmestroms Q ~ k * A durch eine große Fläche A besser kompensiert werden.

Die Verwendung des vorstehend genannten Federelementes bietet den Vorteil, dass ein Freiheitsgrad zum nachträglichen Ein- oder Ausbau der Batterie in die Kühlstruktur zur Verfügung steht. Dieses Federelement weist aber noch den weiteren Vorteil auf, dass durch eine entsprechende Abstimmung des Federelements dauerhaft eine Anpresskraft in einem bestimmten Bereich zwischen der Batterie und der Kühlstruktur erreicht und damit der Wärmeübergang gesichert werden kann. Der Wärmeübergang zwischen nicht stoffschlüssig verbundenen Oberflächen verbessert sich dabei in aller Regel bei Berührung bzw. größerem Anpressdruck.

Ein hoher Anpressdruck ist besonders hilfreich, da z.B. in Fahrzeugen durch Vibrationen bzw. Beschleunigungen, bedingt durch das hohe Eigengewicht der Batterien, große Kräfte auf diese und damit die Schnittstellen wirken, die sich negativ auf den Kontakt und damit den Wärmeübergang zwischen Batterie und Kühlstruktur auswirken könnten. Vorteilhaft ist daher weiterhin, dass die Schnittstelle senkrecht angeordnet ist. Die größten Kräfte bzw. Beschleunigungen wirken in Gravitationsrichtung und damit senkrecht zu den Anpresskräften zwischen Batterie und Kühlstruktur, d.h. die Anpresskräfte werden dadurch nicht bzw. nur geringfügig beeinflusst.

Ferner ist zu berücksichtigen, dass sich beim elektrischen Be- und Entladen der Batterie das Volumen der Zellen ändert. Das Federelement ist erneut vorteilhaft, um die möglichen Auswirkungen der Volumenänderung auf den Wärmeübergang an der Schnittstelle klein zu halten.

## Patentansprüche

1. Halte- und Kohlungsvorrichtung (100) für zumindest eine Energiespeichereinheit (130), wobei die Halte- und Kühlungsvorrichtung (100) folgende Merkmale aufweist:
- einer Kühlungsgrundplatte (120) mit einer Mehrzahl von daran stoffschlüssig befestigten Halteelementen (105), wobei durch zumindest zwei Halteelemente (105) eine Aufnahmetasche für eine Energiespeichereinheit (130) ausgebildet ist; und
zumindest einem Federelement (140), das ausgebildet ist, um durch eine Federkraft auf ein Halteelement (105) oder eine in die Aufnahmetasche einsteckbare Energiespeichereinheit (130) diese im eingesteckten Zustand mit zumindest einem Halteelement (105) thermisch zu kontaktieren, **dadurch gekennzeichnet, dass** ein flächig am Halteelement (105) anordenbares Blech (150) vorgesehen ist, das ausgebildet ist, um in der Aufnahmetasche ein Gehäuse für zumindest eine Energiespeichereinheit (130) zu bilden.

2. Halte- und Kühlungsvorrichtung (100) gemäß Anspruch 1, **dadurch gekennzeichnet, dass** die Mehrzahl der Halteelemente (105) derart angeordnet ist, dass sie eine starre Haltestruktur bilden.

3. Halte- und Kühlungsvorrichtung (100) gemäß Anspruch 1 oder 2, **dadurch gekennzeichnet, dass** die Kühlungsgrundplatte (120) mittels einer Lötung oder einer Schweißung stoffschlüssig mit den Halteelementen (105) verbunden ist.

4. Halte- und Kühlungsvorrichtung (100) gemäß einem der Ansprüche 1 bis 3, **dadurch gekennzeichnet, dass** die Halteelemente (105) durch wärmeleitfähige Rippen, Wärmerohre und/oder durch Kühl- oder Kältemittel durchströmbare Flach- und/oder Sammelrohre gebildet sind.

5. Halte- und Kühlungsvorrichtung (100) gemäß einem der Ansprüche 1 bis 4, **dadurch gekennzeichnet, dass** eine Mehrzahl von Halteelementen (105) je zumindest eine metallische Kontaktfläche (400) aufweist, die in Bezug zur Kühlungsgrundplatte (120) senkrecht ausgerichtet ist.

6. Halte- und Kühlungsvorrichtung (100) gemäß einem der Ansprüche 1 bis 5, **dadurch gekennzeichnet, dass** das Federelement (140) ein Kunststoffmaterial, ein Kunststoffschaum-Material, ein Vlies oder ein Metall umfasst.

7. Halte- und Kühlungsvorrichtung (100) gemäß Anspruch 6, **dadurch gekennzeichnet, dass** das Kunststoffmaterial, das Kunststoffschaum-Material oder das Vlies ein wärmeleitendes und/oder ein elektrisch isolierendes Material umfasst.

8. Halte- und Kühlungsvorrichtung (100) gemäß einem der Ansprüche 1 bis 7, **dadurch gekennzeichnet, dass** das Blech (150) an einer dem Halteelement (105) zuwendbaren Seite ein Wärmeleitmaterial und an einer der Energiespeichereinheit (130) zuwendbaren Seite ein elektrisches Isolationsmaterial aufweist.

9. Halte- und Kühlungsvorrichtung (100) gemäß einem der Ansprüche 1 bis 8, **dadurch gekennzeichnet, dass** das Blech (150) eine Falzung (210) an einem Bereich aufweist, der der Kühlungsgrundplatte (120) zuwendbar ist.

10. Halte- und Kühlungsvorrichtung (100) gemäß einem der Ansprüche 1 bis 9, **dadurch gekennzeichnet, dass** das Federelement (140) zwischen zwei in einer Aufnahmetasche benachbart anordenbaren Energiespeichereinheiten (130) einfügbar ist.

11. Halte- und Kühlungsvorrichtung (100) gemäß einem der Ansprüche 1 bis 10, **dadurch gekennzeichnet, dass** das Federelement (140) zwischen der Energiespeichereinheit (130) und einem Halteelement (105) einfügbar ist.

12. Halte- und Kühlungsvorrichtung (100) gemäß einem der Ansprüche 1 bis 11, **dadurch gekennzeichnet, dass** die Kühlungsgrundplatte (120) an einem Stützelement angeordnet ist, das eine Mehrzahl von schlitzförmigen Öffnungen aufweist, die Leiter-förmig angeordnet sind, wobei die Halteelemente (105) durch die schlitzförmigen Öffnungen angeordnet sind.

13. Halte- und Kühlungsvorrichtung (100) gemäß einem der Ansprüche 1 bis 12, **dadurch gekennzeichnet, dass** die Kühlungsgrundplatte (120) mit Kanälen zur Leitung von Kühl- oder Kältemitteln versehen ist und/oder dass die Kühlungsgrundplatte (120) in thermischer Verbindung mit zumindest einem Rohr zur Leitung von Kühl- oder Kältemitteln angeordnet ist.

## Claims

1. A holding and cooling device (100) for at least one energy storage unit (130), the holding and cooling device (100) including the following features:
- a cooling base plate (120) having a plurality of holding elements (105) integrally joined thereto, at least two holding elements (105) forming a receiving pocket for an energy storage unit (130); and
at least one spring element (140), which is designed to thermally contact an energy storage unit (130) with at least one holding element (105), when the energy storage unit is inserted, by way of a spring force on a retaining element (105) or on an energy storage unit (130) that can be inserted into the receiving pocket, **characterized in that** a metal sheet (150) is provided, which can be arranged on the holding element (105) in a planar manner and is designed to form a housing for at least one energy storage unit (130) in the receiving pocket.

2. The holding and cooling device (100) according to claim 1, **characterized in that** the plurality of holding elements (105) are arranged in such a way that they form a rigid holding structure.

3. The holding and cooling device (100) according to claim 1 or 2, **characterized in that** the cooling base plate (120) is integrally joined to the holding elements (105) by way of a solder joint or a weld joint.

4. A holding and cooling device (100) according to any one of claims 1 to 3, **characterized in that** the holding elements (105) are formed by thermally conductive ribs, heat pipes, and/or by flat and/or collection tubes through which coolants or refrigerants can flow.

5. A holding and cooling device (100) according to any one of claims 1 to 4, **characterized in that** each of a plurality of holding elements (105) has at least one metallic contact surface (400), which is oriented perpendicularly in relation to the cooling base plate (120).

6. A holding and cooling device (100) according to any one of claims 1 to 5, **characterized in that** the spring element (140) includes a plastic material, a plastic foam material, a nonwoven fabric or a metal.

7. The holding and cooling device (100) according to claim 6, **characterized in that** the plastic material, the plastic foam material or the nonwoven fabric comprises a thermally conducting and/or an electrically insulating material.

8. A holding and cooling device (100) according to any one of claims 1 to 7, **characterized in that** the metal sheet (150) comprises a thermally conductive material on a side that can face the holding element (105), or an electric insulating material on a side that can face the energy storage unit (130).

9. A holding and cooling device (100) according to any one of claims 1 to 8, **characterized in that** the metal sheet (150) has a fold (210) in a region that can face the cooling base plate (120).

10. A holding and cooling device (100) according to any one of claims 1 to 9, **characterized in that** the spring element (140) can be inserted between two energy storage units (130) which can be arranged next to each other in a receiving pocket.

11. A holding and cooling device (100) according to any one of claims 1 to 10, **characterized in that** the spring element (140) can be inserted between the energy storage unit (130) and a holding element (105).

12. A holding and cooling device (100) according to any one of claims 1 to 11, **characterized in that** the cooling base plate (120) is arranged on a support element, which has a plurality of slot-shaped openings arranged in a ladder-shaped manner, wherein the holding elements (105) are arranged through the slot-shaped openings.

13. A holding and cooling device (100) according to any one of claims 1 to 12, **characterized in that** the cooling base plate (120) is provided with channels for conducting coolants or refrigerants and/or that the cooling base plate (120) is arranged in thermal connection with at least one tube for conducting coolants or refrigerants.

## Revendications

1. Dispositif de retenue et de refroidissement (100) pour au moins un module accumulateur d'énergie (130), où le dispositif de retenue et de refroidissement (100) présente les éléments caractéristiques suivantes :
- une plaque de base de refroidissement (120) comportant une pluralité d'éléments de retenue (105) fixés par continuité de matière sur ladite plaque de base de refroidissement, où un compartiment de logement prévu pour un module accumulateur d'énergie (130) est formé par au moins deux éléments de retenue (105) ; et
au moins un élément élastique (140) qui est configuré pour, sous l'effet d'une force élastique s'exerçant sur un élément de retenue (105), ou bien par l'action d'un module accumulateur d'énergie (130) emboîtable dans le compartiment de logement, faire venir en contact thermique ledit module accumulateur d'énergie, une fois emboîté, avec au moins un élément de retenue (105),
**caractérisé en ce qu'**il est prévu une tôle (150) pouvant être disposée sur toute la surface de l'élément de retenue (105), tôle qui est configurée pour former, dans le compartiment de logement, un boîtier pour au moins un module accumulateur d'énergie (130).

2. Dispositif de retenue et de refroidissement (100) selon la revendication 1, **caractérisé en ce que** la pluralité des éléments de retenue (105) est disposée de manière telle, qu'elle forme une structure de retenue rigide.

3. Dispositif de retenue et de refroidissement (100) selon la revendication 1 ou 2, **caractérisé en ce que** la plaque de base de refroidissement (120) est assemblée par continuité de matière avec les éléments de retenue (105), au moyen d'un brasage ou d'un soudage.

4. Dispositif de retenue et de refroidissement (100) selon l'une quelconque des revendications 1 à 3, **caractérisé en ce que** les éléments de retenue (105) sont formés par des ailettes à conductibilité thermique, par des tubes de transfert de chaleur et / ou par des tubes plats et / ou par des tubes collecteurs pouvant être traversés par un liquide de refroidissement ou par un fluide frigorigène.

5. Dispositif de retenue et de refroidissement (100) selon l'une quelconque des revendications 1 à 4, **caractérisé en ce qu'**une pluralité d'éléments de retenue (105) présente à chaque fois au moins une surface de contact métallique (400) qui est orientée perpendiculairement à la plaque de base de refroidissement (120).

6. Dispositif de retenue et de refroidissement (100) selon l'une quelconque des revendications 1 à 5, **caractérisé en ce que** l'élément élastique (140) comprend une matière plastique, une matière en mousse de plastique, un textile non tissé ou un métal.

7. Dispositif de retenue et de refroidissement (100) selon la revendication 6, **caractérisé en ce que** la matière plastique, la matière en mousse de plastique ou le textile non tissé comprend une matière conductrice de la chaleur et / ou une matière électroisolante.

8. Dispositif de retenue et de refroidissement (100) selon l'une quelconque des revendications 1 à 7, **caractérisé en ce que** la tôle (150) présente, sur un côté pouvant être tourné vers l'élément de retenue (105), une matière conductrice de la chaleur et, sur un côté pouvant être tourné vers le module accumulateur d'énergie (130), une matière électroisolante.

9. Dispositif de retenue et de refroidissement (100) selon l'une quelconque des revendications 1 à 8, **caractérisé en ce que** la tôle (150) présente un pliage (210) au niveau d'une zone qui peut être tournée vers la plaque de base de refroidissement (120).

10. Dispositif de retenue et de refroidissement (100) selon l'une quelconque des revendications 1 à 9, **caractérisé en ce que** l'élément élastique (140) peut être introduit entre deux modules accumulateurs d'énergie (130) pouvant être disposés en étant adjacents dans un compartiment de logement.

11. Dispositif de retenue et de refroidissement (100) selon l'une quelconque des revendications 1 à 10, **caractérisé en ce que** l'élément élastique (140) peut être introduit entre le module accumulateur d'énergie (130) et un élément de retenue (105).

12. Dispositif de retenue et de refroidissement (100) selon l'une quelconque des revendications 1 à 11, **caractérisé en ce que** la plaque de base de refroidissement (120) est disposée sur un élément support qui présente une pluralité d'ouvertures en forme de fente, ouvertures qui sont disposées en forme d'échelle, où les éléments de retenue (105) sont disposés a travers les ouvertures en forme de fente.

13. Dispositif de retenue et de refroidissement (100) selon l'une quelconque des revendications 1 à 12, **caractérisé en ce que** la plaque de base de refroidissement (120) est dotée de conduits pour l'acheminement, de liquides de refroidissement ou de fluides frigorigènes et / ou **en ce que** la plaque de base de refroidissement (120) est disposée en étant en liaison thermique avec au moins un tube servant à l'acheminement de liquides de refroidissement ou de fluides frigorigènes.
